# EUROPÄISCHE PATENTSCHRIFT

(11) **EP 0 522 536 B1**
(45) Veröffentlichungstag und Bekanntmachung des Hinweises auf die Patenterteilung: **11.10.1995**
(21) Anmeldenummer: 92111603.4
(22) Anmeldetag: 08.07.1992
(51) Int. Cl.: B29C 47/00, B65H 23/34

(54) **Blasfolienanlage**
Blow moulding installation
Installation d'extrusion-soufflage

(30) Priorität: 12.07.1991 DE 4123083
(43) Veröffentlichungstag der Anmeldung: 13.01.1993
(73) Patentinhaber: BARMAG AG, D-42862 Remscheid (DE)
(72) Erfinder: Hessenbruch, Rolf, W-5630 Remscheid (DE)
(74) Vertreter: Pfingsten, Dieter, Dipl.-Ing.

(56) Entgegenhaltungen:
- EP-A- 0 292 614
- EP-A- 0 347 499
- DE-A- 3 100 520
- US-A- 2 995 990
- US-A- 3 231 651
- US-A- 3 716 322

## Beschreibung

Die Erfindung betrifft ein Verfahren zur Herstellung von Flachfolien nach dem Oberbegriff des Patentanspruches 1 sowie eine Blasfolienanlage zur Durchführung dieses Verfahrens nach dem Oberbegriff des Patentanspruches 6.

Dieses Verfahren und diese Blasfolienanlage sind aus der US-A 3,231,651 bekannt. Hier erfolgt das Trennen der flachgelegten Schlauchfolie zwar durch einen Randbeschnitt, der gleichzeitig die Breite der Flachfolienbahnen festlegt, zwischen einer Umlenkwalze und mit dieser zusammenwirkenden Messerwalzen. Aus dem Stand der Technik sind aber auch Trenneinrichtungen, beispielsweise nach der DE-A 2229170 bekannt, mit denen die flachgelegte Schlauchfolie verlustlos in Längsrichtung aufgeschlitzt werden kann. Bei dem bekannten Stand der Technik sind die Aufwickeleinrichtungen in Rücken an Rücken Anordnung aufgestellt und zum Abnehmen der vollen Folienwickel ist auf beiden Seiten der Aufwickeleinrichtung ein Bedienungsgang.

Bei der Herstellung einer Schlauchfolie wird aufgeschmolzenes Granulat mittels eines Extruders in eine Werkzeugeinheit extrudiert und zu einem Folienschlauch ausgepreßt, der aufgeblasen und anschließend in einer Flachlegeinrichtung flachgelegt wird. Dabei wird der Schlauch aufeinandergelegt. Hierdurch entstehen flache Folienbahnen, die an ihren Rändern miteinander verbunden sind, wobei die Schlauchinnenwand zwischen den Folienbahnen eingeschlossen ist.

Die Folienbahnen werden anschließend in Längsrichtung aufgeschlitzt, und die so entstandenen Flachfolienbahnen werden dann aufgewickelt. Hierbei kommt es entscheidend darauf an, daß die Wickel eine gleichartige Beschaffenheit, beispielsweise Schweißbarkeit oder Bedruckbarkeit aufweisen, die dadurch sichergestellt ist, daß die Außenseite oder Innenseite der ehemaligen Schlauchfolie bei allen Wickeln einheitlich nach außen oder innen zeigt.

So ist es für die Weiterverarbeitung oft sehr wichtig, daß eine bestimmte Oberfläche an der Innen- oder Außenseite des Wickels liegt. Dies gilt insbesondere für coextrudierte Schlauchfolien, bei denen die Innenseite beispielsweise aus einem anderen Polymeren besteht als die Außenseite und der Folienwickel einem Schweißautomaten vorgelegt wird. Andererseits kann es jedoch bei der Folienherstellung selbst von Vorteil sein, wenn eine bestimmte Oberflächenseite genau auf der anderen Seite, d.h. innen bzw. außen, aufgewickelt wird.

Die oftmals sehr schweren vollen Wickel müssen dann vor der Weiterverarbeitung durch Umwickeln so gewendet werden, daß die Drehrichtung beim Abrollen aller Wickel gleich ist.

Aufgabe der Erfindung ist es, ein Verfahren zur Herstellung von Flachfolienbahnen aus im Folienblasverfahren hergestellten Schlauchfolien zu schaffen, welches ein Umwickeln der fertigen Wickel überflüssig macht.
Weitere Aufgabe ist es, die bekannte Blasfolienanlage so anzuordnen, daß der Platzbedarf für die gesamte Anlage geringer wird, und daß die Bedienung dennoch so vereinfacht wird, daß die Kosten gesenkt werden können.

Diese Aufgabe wird durch ein Verfahren nach Patent anspruch 1 gelöst.
Die weitere Aufgabe wird mit den Merkmalen des Patentanspruches 6 gelöst.

Aus der Erfindung ergibt sich der Vorteil, daß je nach Folienführung in einer Weiterverarbeitungsanlage die Oberfläche der abrollenden Folienbahn ohne Aufwand gewählt werden kann. Jeder volle Wickel nimmt bei Anwendung der Erfindung automatisch seine richtige Lage ein, wie alle anderen Wickel auch. Dabei ist trotzdem sichergestellt, daß die ehemalige Innenseite bzw. Außenseite des Folienschlauches bei allen Wickeln nach innen bzw. außen zeigt. Die Erfindung ermöglicht es ohne weiteres vorzugeben, ob die Innen- oder die Außenseite des Folienschlauches auf dem späteren Folienwickel nach innen oder nach außen zeigen soll. Hierfür sind Ausführungsbeispiele angegeben.
Dabei ist der technische Aufwand für die Ausführung der Erfindung, gemessen am wirtschaftlichen Nutzen, gering. Die Wendeeinrichtungen bestehen aus speziellen Wenderollen. Für glatte Warenbahnen eignen sich auch Umlenkstangen. Für stumpfe Warenbahnen empfehlen sich besonders angepaßte Wenderollen. Diese unterschiedlichen Umlenkstangen bzw. Wenderollen können in einer Weiterbildung der Erfindung austauschbar sein, um die Blasfolienanlage zur Herstellung unterschiedlicher Folienqualitäten einsetzen zu können.

Aus den Unteransprüchen ergeben sich jeweils vorteilhafte Weiterbildungen der Erfindung.

Bei der Weiterbildung nach Anspruch 2 kann die gemeinsame Eingangslaufrichtung der Folienbahn jede Richtung annehmen, also horizontal, vertikal oder schräg verlaufen, so daß dieses Verfahren an jeder Blasfolienanlage eingesetzt werden kann. Die Umkehrung einer der beiden ebenen Folienbahnen nach der Trennung erfolgt bevorzugt um 180 Grad. Nach dem Wendevorgang werden beide Folienbahnen einzeln so geführt, daß sie vertikal nach unten ihren Aufwickeleinrichtungen zugeführt werden.

Sofern die Eingangslaufrichtung gemäß Anspruch 3 horizontal liegt, empfiehlt es sich, nach der Laufrichtungsumkehr einer der ebenen Folienbahnen die getrennten Folienbahnen jeweils einmal um 90 Grad vertikal nach unten zu drehen und dabei um ihre Längsachse so zu wenden, daß sie mit derselben Oberflächenseite der zugeordneten Aufwickeleinrichtung zugeführt werden.

Beide ebenen Folienbahnen können durch gemeinsame Umlenkung um 90 Grad in die horizontale Eingangslaufrichtung gebracht werden, bevor sie durch Laufrichtungsumkehr einer der beiden Folienbahnen voneinander getrennt werden.

Bei einer bereits vertikalen Eingangslaufrichtung beider Folienbahnen muß lediglich die in ihrer Laufrichtung umgekehrte Folienbahn zweimal um 90 Grad gewendet werden, während die andere der beiden Folienbahnen ohne Umlenkung in vertikaler Richtung weitergeführt werden kann.

Als Wendeeinrichtungen bieten sich die an sich bekannten drehbar gelagerten Rollen an, die zweckmäßigerweise alle im wesentlichen in einer einzigen Ebene liegen, um eine möglichst verzugsfreie Führung der einzelnen ebenen Folienbahn zu gewährleisten. Bei dieser Ausführung verlaufen die Folienbahnen innerhalb der Wendeeinrichtung zueinander parallel und können demgemäß symmetrisch ihren Aufwickeleinrichtungen zugeführt werden. Diese Ausführung bietet den Vorteil einer platzsparenden Anordnung der Aufwickeleinrichtungen, die nebeneinander angeordnet werden können. Hierbei ist die Zugänglichkeit der Wickelstationen für den Transport der fertigen Wickel wesentlich günstiger als bei der bekannten Rücken-an-Rücken-Anordnung oder einer Hintereinanderanordnung der Wickelstationen. Bei einer solchen platzsparenden Anordnung der Wickeleinrichtungen werden die Wickelwellen bei Anwendung der erfindungsgemäßen Führung und Umlenkung der Folienbahnen mit gleicher Drehrichtung und im wesentlichen gleicher Geschwindigkeit angetrieben. Hierbei ergeben sich außerdem Vorteile hinsichtlich einer Automatisierung der Beschickung der Wickeleinrichtungen mit Leerhülsen, der Wickelentnahme und des Abtransportes der Folienwickel, da alle Wickelstationen eine gleiche Ausrichtung haben.

Im folgenden wird die Erfindung anhand von Ausführungsbeispielen näher erläutert.
Es zeigen:
- Fig 1:: Eine erfindungsgemäße Blasfolienanlage mit einer vertikalen Zuführung der flachgelegten Folienbahn in die Wendeeinrichtung und horizontaler Umlenkung in die Eingangslaufrichtung und mit nach innen weisenden Außenseiten der aufgetrennten Schlauchfolie auf dem Folienwickel.
- Fig 2:: Eine erfindungsgemäße Wendeeinrichtung entsprechend der Fig. 1 mit nach außen weisenden Außenseiten der aufgetrennten Schlauchfolie auf dem Folienwickel.
- Fig 3:: eine Wendeeinrichtung mit vertikaler Eingangslaufrichtung.

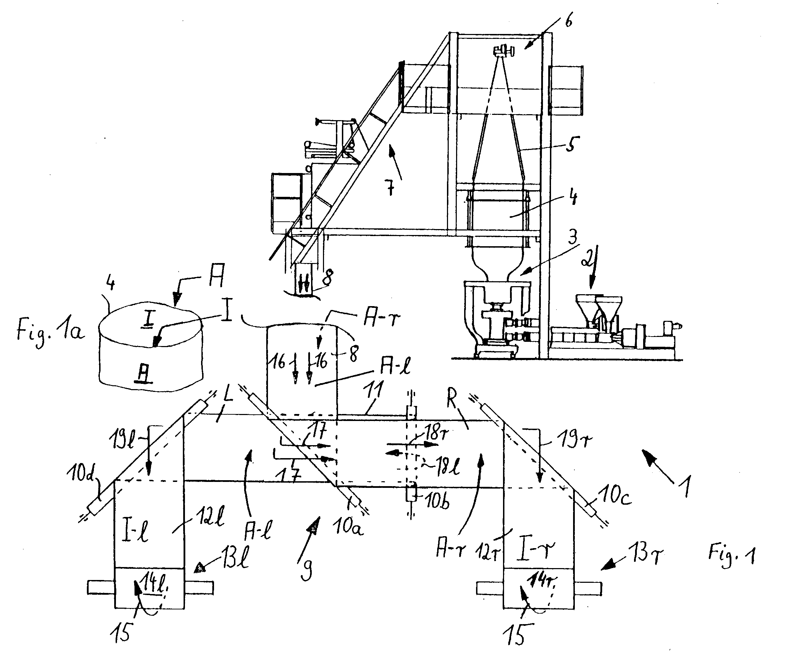

Wie Fig. 1 zeigt, besteht eine erfindungsgemäße Blasfolienanlage 1 aus mindestens einem Extruder 2, zum Aufschmelzen und Extrudieren des Polymergranulats, welches in einer Werkzeugeinheit 3 zu einem Folienschlauch stranggepreßt und anschließend zu einer Schlauchfolie 4 aufgeblasen wird. Zur Herstellung einer coextrudierten Verbundschlauchfolie werden entsprechend der Anzahl der unterschiedlichen Polymeren mehrere Extruder und ein geeignetes Adaptersystem für die Werkzeugeinheit 3 oder eine spezielle Spritzdüse benötigt. Wie Fig. 1a zeigt, besteht die Schlauchfolie 4 aus einem Schlauchkörper, dessen Innenwandung mit I und dessen Außenwandung mit A bezeichnet wird.
Diese Schlauchfolie 4 wird, wie Fig. 1 zeigt, aus der Werkzeugeinheit 3 vertikal aufwärts abgezogen, dabei gekühlt und kalibriert und durchläuft eine Flachlegung 5, in welcher sie flach aufeinandergelegt wird. Dabei entsteht ein aufeinanderliegendes Paar von Halbschläuchen, die mittels einer Umlenkung 6 am Ende des vertikalen Aufstiegs zwecks einer geeigneten Weiterbehandlung zum Abstieg 7 geführt werden. Die Weiterbehandlung umfaßt auch das Aufschlitzen der Schlauchfolie 4 mittels einer nicht gezeigten Trenneinrichtung, welche die zusammengelegte Schlauchfolie an den beiden gegenüberliegenden Knickrändern in Längsrichtung zu zwei ebenen Folienbahnen aufschlitzt, während sie kontinuierlich an der Trenneinrichtung vorbeiläuft. Dabei bleiben die ebenen Folienbahnen mit den Innenseiten I aufeinander liegen, so daß sie später noch getrennt werden müssen.

Die aufeinander liegenden Folienbahnen 8 werden anschließend der Wendeeinrichtung 9 zugeführt, welche die Folienbahnen trennt und derart in gleiche Seitenlage richtet, daß die beiden ebenen Folienbahnen mit ihren Innenseiten I bzw. mit ihren Außenseiten A in die gleiche Richtung weisen.

Hierzu weist die Wendeeinrichtung 9 für die vertikal einlaufenden Folienbahnen 8 vier drehbar gelagerte Umlenkeinrichtungen 10a, b, c, d auf, deren Kombination das erfindungsgemäße Wenden beider Folienbahnen bewirkt.

Die erste Umlenkeinrichtung 10a ist der Wendeeinrichtung 9 vorgeschaltet und lenkt die vertikal mit den identischen Laufrichtungen 16 ankommenden beiden Folienbahnen 8 um 90 Grad in die horizontale Eingangslaufrichtung 17 um. Hierzu ist die erste Umlenkeinrichtung 10a entgegen dem Uhrzeigersinn um 45 Grad zu der hier vertikalen Folienlaufrichtung 16 geneigt und wird von beiden aufeinanderliegenden Folienbahnen auf einem Teilumfang umschlungen. An dieser Stelle könnten die beiden Folienbahnen alternativ noch als Folienschlauch im nicht aufgeschlitzten Zustand auf die gezeigte Weise umgelenkt werden. Das Aufschlitzen des Folienschlauches zu "Flachfolien" muß prinzipiell erst unmittelbar vor der nächsten Umlenkeinrichtung 10b geschehen.

Die nächste Umlenkeinrichtung 10b in Form einer drehbar gelagerten Rolle oder Walze ist definiert als die erste Umlenkeinrichtung 10b der Wendeeinrichtung. Die nunmehr hinten liegende der beiden Folienbahnen 8 erfährt an der ersten Umlenkeinrichtung 10b der Wendeeinrichtung 9 eine Umkehrung um 180 Grad. Hierbei werden die bis hierhin aufeinanderliegenden Folienbahnen voneinander getrennt. Die vordere der beiden Folienbahnen wird weitergeführt mit der bisherigen Bewegungsrichtung 18r, während die hintere der beiden Folien in der umgekehrten Bewegungsrichtung 18 l weiterläuft. Deshalb wird diese Folienbahn ab hier als umgelenkte Flachfolie 11 bezeichnet.
Beide Laufrichtungen 18r, 18l sind entgegengesetzt gerichtet, und weisen voneinander weg. Für jede der beiden Folienbahnen R, L ist anschließend eine zweite Umlenkeinrichtung 10c, 10d vorgesehen, die derart zu der Laufrichtung der jeweils zugehörigen Folie liegt, daß jede Folienbahn aus der horizontalen Laufrichtung in die vertikale Ausgangslaufrichtung 19r, 19 l umgelenkt wird.

Hierzu ist die Umlenkeinrichtung 10c um 45 Grad gegen den Uhrzeigersinn und die Umlenkeinrichtung 10d um 45 Grad im Uhrzeigersinn schräg zur Vertikalen geneigt und beide Umlenkeinrichtungen werden von den Folienbahnen auf einem Teilumfang umschlungen.

Wie vor der vorgeschalteten Umlenkeinrichtung 10a dargestellt ist, befindet sich die Außenseite A-r der rechten Folienbahn R und die Außenseite A-l der linken Folienbahn L auf der Rückseite bzw. auf der Vorderseite der beiden aufeinanderliegenden Folien 8, bevor diese die erste Umlenkeinrichtung 10b der Wendeeinrichtung erreichen. Nach dem Umlenken der hinteren der beiden Folienbahnen an der ersten Umlenkeinrichtung 10b befinden sich beide Außenseiten A-r bzw. A-l auf der Vorderseite der separat weiterlaufenden Folien R und L, und werden nach Umkehrung an den Umlenkeinrichtungen 10c, 10d auf die nicht sichtbare Rückseite gewendet. Dabei gelangen die ehemaligen Innenseiten I-l , I-r auf die nunmehr sichtbaren Vorderseiten der beiden Folienbahnen. Hierdurch nehmen beide Folienbahnen eine Seitenlage an, in der sie mit ihren Außenseiten bzw. Innenseiten einheitlich in die gleiche Richtung weisen.

Mit dieser Seitenlage werden anschließend die gerichteten Folienbahnen einer rechten bzw. linken Aufwickeleinrichtung 13r bzw 13 l zugeführt, welche die Folienwickel 14r bzw 14 l in gleichen Drehrichtungen 15 antreiben, so daß bei allen Wickeln 14 in diesem Ausführungsbeispiel der Erfindung die Außenseiten A-r , A-l des Folienschlauches 4 einheitlich nach außen weisen.

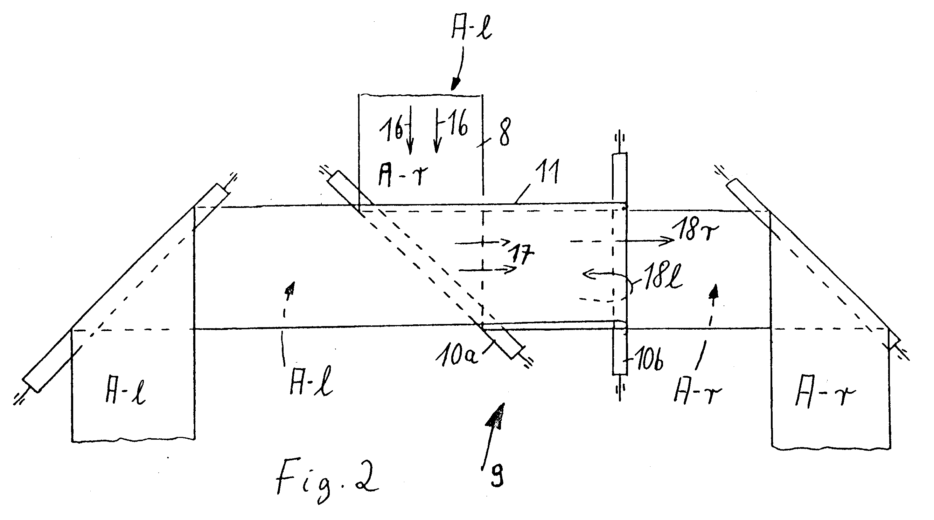

Ein weiteres Ausführungsbeispiel der Erfindung ist in Fig. 2 dargestellt. Für diese Darstellung gilt die Beschreibung der Fig. 1 in vollem Umfang. Der Unterschied liegt jedoch darin, daß an der ersten Umlenkeinrichtung 10b der Wendeeinrichtung 9 die vorne liegende der beiden Folienbahnen umgekehrt wird. Hierdurch ergibt sich, daß die beiden Folien vor der Aufwickeleinrichtung nunmehr mit ihren Außenseiten A-l , A-r sichtbar sind, und demgemäß unter Beibehaltung der Aufwickelrichtung 15 die ehemaligen Außenseiten des Folienschlauches 4 bei allen Wickeln 14 nach innen weisen.

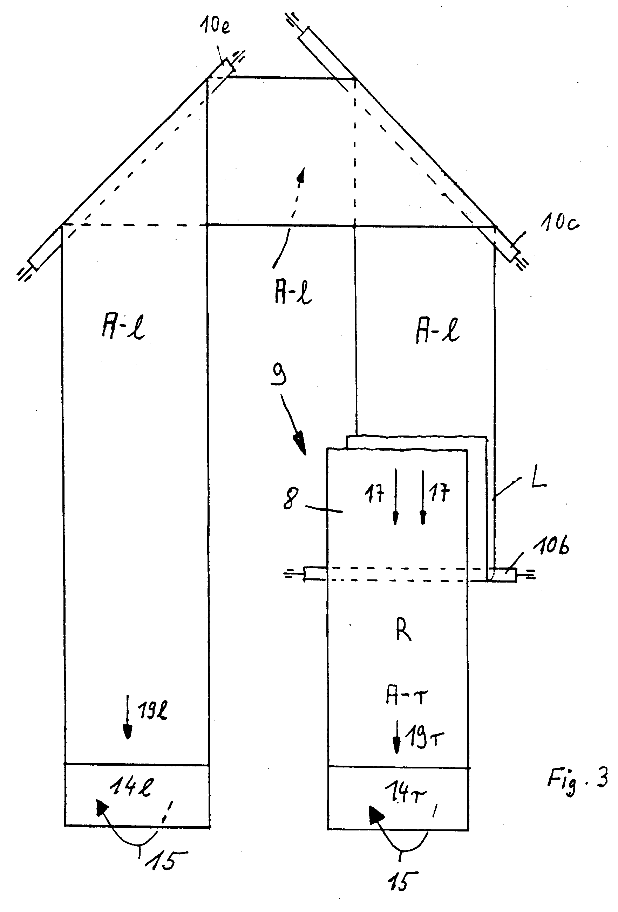

Eine weitere Ausführungsform der Erfindung ist in Fig. 3 dargestellt. Der Unterschied zu den bisherigen Darstellungen, auf die in vollem Umfang Bezug genommen wird, liegt darin, daß beide aufeinanderliegende Folienbahnen 8 in vertikaler Eingangslaufrichtung 17 der Wendeeinrichtung 9 zulaufen. An der ersten Umlenkeinrichtung 10b erfährt als Beispiel die hintere der beiden Folienbahnen L eine Umkehrung um 180 Grad. Dies wird wie in Fig. 1 durch eine mit ihrer Drehachse senkrecht zur Eingangslaufrichtung 17 liegende Umlenkeinrichtung 10b erreicht. Anschließend wird die umgelenkte Folienbahn über eine zweite Umlenkeinrichtung 10c geführt, welche um 45 Grad gegen den Uhrzeigersinn aus der vertikalen Aufwärtslaufrichtung der hinteren Folienbahn L gedreht ist. An dieser Umlenkeinrichtung 10c erfährt die hintere Folie eine Umlenkung in die Horizontale und wird mit dieser Laufrichtung einer dritten Umlenkeinrichtung 10e zugeführt, welche um 45 Grad im entgegengesetzten Drehsinn, also mit dem Uhrzeigersinn aus der Vertikalen gedreht ist. Die dritte Umlenkeinrichtung 10e lenkt die ankommende Folienbahn L in die vertikal nach unten weisende Ausgangslaufrichtung 19 l um, und beide Folienbahnen R, L werden parallel zueinander und mit ihren Außenseiten A-r , A-l in einheitliche Richtung weisend ihren gleichsinnig angetriebenen (Drehrichtung 15) Aufwickeleinrichtungen 13 zugeführt. Im übrigen wird für die nicht näher beschriebenen Einzelheiten in vollem Umfang auf die Offenbarung der Fig. 1 Bezug genommen.

Abschließend sei klargestellt, daß der Begriff Flachfolie, wenn er in den Patentansprüchen oder in der Beschreibung dieser Erfindung benutzt wurde, für eine flachgelegte Folienbahn einer im Folienblasverfahren hergestellten Schlauchfolie oder eines aufgetrennten Halbschlauches steht, die aufgrund ihres Herstellungsverfahrens eine biaxiale Orientierung aufweist. Dies sei erwähnt, da mit Flachfolie üblicherweise eine nach dem Breitspritz- oder Foliengießverfahren hergestellte und ggf. mono- oder biaxial verstreckte Folienbahn verstanden wird.

### BEZUGSZEICHENAUFSTELLUNG

- 1: Blasfolienanlage
- 2: Extruder
- 3: Werkzeugeinheit, Strangpreßdüse
- 4: Schlauchfolie, Folienschlauch
- 5: Flachlegeinrichtung
- 6: Umlenkung
- 7: Abstieg
- 8: aufeinanderliegende Folienbahn
- 9: Wendeeinrichtung
- 10a-e: Umlenkeinrichtung
- 11: umgelenkte Folienbahn
- 12r,l: rechte bzw. linke vertikal laufende Folienbahn
- 13r,l: rechte bzw. linke Aufwickeleinrichtung
- 14r,l: Folienwickel
- 15: Drehrichtung
- 16: Folienlaufrichtung
- 17: Eingangslaufrichtung
- 18r,l: Bewegungsrichtung
- 19r,l: vertikale Laufrichtung zum Wickel, Ausgangslaufrichtung
- A-l , A-r: Außenseite der linken bzw. rechten Folienbahn
- R, L: linke bzw. rechte Folienbahn

## Patentansprüche

1. Verfahren zur Herstellung von Flachfolien durch Längsschlitzen und Trennen einer flachgelegten Schlauchfolie (4), welche zu Aufwickeleinrichtungen (13) geführt und dort derart aufgewickelt werden, daß bei allen Wickeln (14) entweder die Innen- (I) oder die Außenseite (A) der flachgelegten Schlauchfolie (4) einheitlich in dieselbe Richtung weist,
wobei in Folienlaufrichtung (16) gesehen hinter der Stelle zum Auftrennen der flachgelegten Schlauchfolie (4) in zwei Flachfolienbahnen (12 l, 12 r) diese beiden Flachfolienbahnen (12 l, 12 r) aus ihrer gemeinsamen Laufrichtung durch Umlenkung einer der beiden Folienbahnen (12 l, 12 r) voneinander getrennt werden,
dadurch gekennzeichnet, daß
in Folienlaufrichtung (16) gesehen hinter der Trennstelle, an der die zwei Flachfolienbahnen (12 l, 12 r) voneinander getrennt werden, die eine Folienbahn (12 l) wieder in die gleiche Laufrichtung (19) und parallelversetzt zur Laufrichtung der anderen Folienbahn (12 r) umgelenkt wird und daß beide Folienbahnen (12 l, 12 r) den beiden in dieser Richtung (19) stehenden, parallelversetzten und mit gleicher Drehrichtung (15) angetriebenen Aufwickeleinrichtungen (13) zugeführt werden.

2. Verfahren nach Anspruch 1,
dadurch gekennzeichnet, daß
die beiden Flachfolienbahnen (12 l, 12 r) aus einer gemeinsamen Eingangslaufrichtung (17) nach ihrer Trennung und nach der Laufrichtungsänderung der einen Folienbahn jeweils in einer vertikalen Ausgangslaufrichtung (19) den Aufwickeleinrichtungen (13) zugeführt werden.

3. Verfahren nach Anspruch 2,
dadurch gekennzeichnet, daß
die Eingangslaufrichtung (17) horizontal liegt und daß nach einer Laufrichtungsumkehr der einen Folienbahn (11) um 180 Grad beide Folienbahnen in ihrer Laufrichtung jeweils um 90 Grad in die vertikale Ausgangslaufrichtung (19) gedreht und dabei um ihre Längsachse derart um 180 Grad gewendet werden, daß beide Folienbahnen (12 l, 12 r) mit derselben Seite (A, I) nach außen zeigend zu einem Folienwickel (14 l, 14 r) aufgewickelt werden.

4. Verfahren nach Anspruch 3,
dadurch gekennzeichnet, daß
die Folienbahnen aus der vertikalen Folienlaufrichtung (16) kommend gemeinsam um 90 Grad in die horizontale Eingangslaufrichtung (17) umgelenkt werden.

5. Verfahren nach Anspruch 2,
dadurch gekennzeichnet, daß
die Eingangslaufrichtung (17) vertikal liegt und daß die umgelenkte Folienbahn (L) zunächst um 90 Grad in eine horizontale Laufrichtung und aus dieser um 90 Grad zurück in die vertikale Ausgangslaufrichtung (19) umgelenkt wird.

6. Blasfolienanlage (1) für eine Schlauchfolie (4), die im flachgelegten Zustand mittels einer Trenneinrichtung in Längsrichtung zu ebenen Folienbahnen (12 l, 12 r) aufgeschlitzt wird, wobei die getrennten Flachfolien jeweils einer Aufwickeleinrichtung (13) zugeführt und dort derart aufgewickelt werden, daß bei allen Wickeln (14) die Innen- (I) oder Außenseite (A) der Schlauchfolie (4) einheitlich in dieselbe Richtung weist,
dadurch gekennzeichnet, daß
in Folienlaufrichtung gesehen hinter der Trenneinrichtung zum Aufschlitzen der flachgelegten Schlauchfolie (4) in zwei Flachfolienbahnen (12 l, 12 r) eine Wendeeinrichtung (9) vorgesehen ist und daß die beiden Folienbahnen (12 l, 12 r) um die Wendeeinrichtung (9) derart geführt und um ihre Längsachse gewendet werden, daß die beiden Folienbahnen (12 l, 12 r) aus ihrer gemeinsamen Laufrichtung durch Umlenkung einer der beiden Folienbahnen (12 l) voneinander getrennt werden, diese eine der beiden Folienbahnen (12 l) danach wieder in die gleiche Laufrichtung (19) und parallelversetzt zu der anderen Folienbahn (12 r) umgelenkt wird und die beiden Folienbahnen (12 l, 12 r) den beiden in dieser Laufrichtung stehenden, parallelversetzten und mit gleicher Drehrichtung (15) angetriebenen Aufwickeleinrichtungen (13 l, 13 r) zugeführt werden.

7. Blasfolienanlage (1) nach Anspruch 6,
dadurch gekennzeichnet, daß
die Folienbahnen in horizontaler Eingangslaufrichtung (17) in die Wendeeinrichtung (9) laufen, von welcher eine erste Umlenkeinrichtung (10 b) zur Laufrichtungsumkehr einer der beiden Folienbahnen senkrecht zur Folienlaufrichtung (17) liegt, und daß für beide Folienbahnen anschließend jeweils eine zweite Umlenkeinrichtung (10 c, 10 d) vorgesehen ist, die derart zu der Laufrichtung der zugehörigen Folienbahn liegt, daß sie die Folienbahn in eine vertikale Laufrichtung zu den parallelversetzt nebeneinander angeordneten Aufwickeleinrichtungen (13) umlenkt.

8. Blasfolienanlage (1) nach Anspruch 6,
dadurch gekennzeichnet, daß
die Folienbahnen in vertikaler Richtung nach unten in die Wendeeinrichtung (9) laufen, von denen eine erste Umlenkeinrichtung (10 b) zur Laufrichtungsumkehr einer der beiden Folienbahnen senkrecht zur Folienlaufrichtung (17) liegt, daß für die umgelenkte Folienbahn (L) anschließend eine zweite, schräggestellte Umlenkeinrichtung (10 c) vorgesehen ist, die deren Laufrichtung horizontal umlenkt, und daß anschließend eine dritte schräggestellte Umlenkeinrichtung (10 e) vorgesehen ist, mit welcher diese in die vertikale Laufrichtung (19) umgelenkt wird.

9. Blasfolienanlage (1) nach Anspruch 7,
dadurch gekennzeichnet, daß
die Folienbahnen in vertikaler Laufrichtung (16) der Wendeeinrichtung (9) zugeführt werden, und daß die Folienbahnen von einer vorgeschalteten Umlenkeinrichtung (10 a), die unter 45 Grad zur Folienlaufrichtung (16) liegt, in die horizontale Eingangslaufrichtung (17) umgelenkt werden.

10. Blasfolienanlage (1) nach einem der Ansprüche 6 bis 9,
dadurch gekennzeichnet, daß
die in dieselbe Seitenlage (I, A) gewendeten Folienbahnen zueinander parallel und im wesentlichen in der gleichen Ebene liegend zu ihren Aufwickeleinrichtungen (13) laufen.

11. Blasfolienanlage (1) nach einem der Ansprüche 7 bis 10,
dadurch gekennzeichnet, daß
die Umlenkeinrichtungen (10 a - 10 e) so in einer Ebene liegen, daß die Folienbahnen innerhalb der Wendeeinrichtung (9) zueinander parallel laufen.

12. Blasfolienanlage (1) nach einem der Ansprüche 6 bis 10,
dadurch gekennzeichnet, daß
die Schlauchfolie (4) in zwei gleichbreite ebene Folienbahnen aufgetrennt wird.

13. Blasfolienanlage (1) nach mindestens einem der Ansprüche 6 bis 12,
dadurch gekennzeichnet, daß
die Aufwickeleinrichtungen (13) nebeneinander angeordnet und die miteinander fluchtenden oder achsparallelen Wickelwellen zweier benachbarter Aufwickeleinrichtungen (13) mit gleicher Drehrichtung (15) und gleicher Drehgeschwindigkeit angetrieben sind.

## Claims

1. Method of manufacturing flat films by longitudinally slitting and separating a laid-flat tubular film (4) which flat films are conveyed to take-up devices (13) where they are wound in such a manner that in all rolls (14) either the inside (I) or the outside (A) of the laid-flat tubular film (4) uniformly points in the same direction,
wherein, viewed in film running direction (16),
downstream of the point of separation of the laid-flat tubular film (4) into two flat film webs (12 l, 12 r) said two flat film webs (12 l, 12 r) are separated from one another by deflection of one of the two film webs (12 l, 12 r) out of their common running direction,
characterized in that
viewed in film running direction (16), downstream of the separation point at which the two flat film webs (12 l, 12 r) are separated from one another, the one film web (12 l) is deflected once more into the same running direction (19) and offset parallel to the running direction of the other film web (12 r) and that both film webs (12 l, 12 r) are fed to the two take-up devices (13), which lie in said direction (19), are offset in parallel and are driven in an identical direction of rotation (15).

2. Method according to claim 1,
characterized in that
the two flat film webs (12 l, 12 r) from a common inward running direction (17) are fed after their separation and after the change of running direction of the one film web in each case in a vertical outward running direction (19) to the take-up devices (13).

3. Method according to claim 2,
characterized in that
the inward running direction (17) is horizontal and that, after a reversal of the running direction of the one film web (11) through 180°, both film webs have their running direction rotated in each case through 90° into the vertical outward running direction (19) and in the process are turned through 180° about their longitudinal axis in such a way that both film webs (12 l, 12 r) are wound into a film roll (14 l, 14 r) with the same side (A, I) directed outwards.

4. Method according to claim 3,
characterized in that
the film webs coming from the vertical film running direction (16) are jointly deflected through 90° into the horizontal inward running direction (17).

5. Method according to claim 2,
characterized in that
the inward running direction (17) is vertical and that the deflected film web (L) is deflected initially through 90° into a horizontal running direction and from said direction through 90° back into the vertical outward running direction (19).

6. Blown film installation (1) for a tubular film (4) which, in the laid-flat state, is slit open in a longitudinal direction by a separating device to form flat film webs (12 l, 12 r), the separated flat films each being fed to a take-up device (13) where they are wound in such a way that in all of the rolls (14) the inside (I) or outside (A) of the tubular film (4) uniformly points in the same direction,
characterized in that
viewed in film running direction, downstream of the separating device for slitting open the laid-flat tubular film (4) to form two flat film webs (12 l, 12 r), a turning device (9) is provided and that the two film webs (12 l, 12 r) are so conveyed around the turning device (9) and turned about their longitudinal axis that the two film webs (12 l, 12 r) are separated from one another by deflection of one of the two film webs (12 l) out of their common running direction, said one of the two film webs (12 l) is then deflected once more into the same running direction (19) and offset parallel to the other film web (12 r) and the two film webs (22 l, 12 r) are fed to the two take-up devices (13 l, 13 r), which lie in said running direction, are offset in parallel and are driven in an identical direction of rotation (15).

7. Blown film installation (1) according to claim 6,
characterized in that
the film webs run in a horizontal inward running direction (17) into the turning device (9), of which a first deflection device (10 b) for reversing the running direction of one of the two film webs lies at right angles to the film running direction (17), and that for each of the two film webs a second deflection device (10 c, 10 d) is subsequently provided, which is so situated relative to the running direction of the associated film web that it deflects the film web into a vertical running direction towards the take-up devices (13) disposed offset in parallel alongside one another.

8. Blown film installation (1) according to claim 6,
characterized in that
the film webs run in a vertical direction downwards into the turning device (9), of which a first deflection device (10 b) for reversing the running direction of one of the two film webs lies at right angles to the film running direction (17), that for the deflected film web (L) a second inclined deflection device (10 c) is subsequently provided which deflects the running direction of said web horizontally, and that a third inclined deflection device (10 e) is subsequently provided, by means of which said web is deflected into the vertical running direction (19).

9. Blown film installation (1) according to claim 7,
characterized in that
the film webs are fed in a vertical running direction (16) to the turning device (9), and that the film webs are deflected into the horizontal inward running direction (17) by an upstream deflection device (10 a), which is disposed at an angle of 45° to the film running direction (16).

10. Blown film installation (1) according to one of claims 6 to 9,
characterized in that
the film webs, which have been turned into the same position with regard to their sides (I, A), run parallel to one another and substantially in the same plane towards their take-up devices (13).

11. Blown film installation (1) according to one of claims 7 to 10,
characterized in that
the deflection devices (10 a - 10 e) are disposed in one plane so that the film webs run parallel to one another inside the turning device (9).

12. Blown film installation (1) according to one of claims 6 to 10,
characterized in that
the tubular film (4) is separated into two equally wide, flat film webs.

13. Blown film installation (1) according to at least one of claims 6 to 12,
characterized in that
the take-up devices (13) are disposed alongside one another and the aligned or paraxial winding spindles of two adjacent take-up devices (13) are driven in the same direction of rotation (15) and at the same rotational speed.

## Revendications

1. Procédé de fabrication de feuilles planes par fendage longitudinal et séparation d'une feuille (4) soufflée mise à plat, laquelle feuille est amenée à des dispositifs (13) d'enroulement et est enroulée dans ceux-ci de manière telle que, pour chaque rouleau (14), la face intérieure (I) ou la face extérieure (A) de la feuille (4) soufflée mise à plat soit orientée de manière uniforme dans la même direction, les deux bandes (12 l, 12 r) de feuille plane étant séparées l'une de l'autre, à partir de leur direction commune de marche, par déviation de l'une des deux bandes (12 l, 12 r) en aval du point où la feuille (4) soufflée mise à plat est séparée en deux bandes de feuille (12 l, 12 r) planes, vu dans la direction (16) de marche de la feuille, caractérisé par le fait que, vu dans la direction (16) de marche de la feuille, en aval du point où les deux bandes (12 l, 12 r) planes de feuille sont séparées l'une de l'autre, on dévie l'une des bandes (12 l) de feuille dans la même direction (19) de marche en la décalant parallèlement à la direction de marche de l'autre bande (12 r) et par le fait que l'on amène les deux bandes de feuille (12 l, 12 r) aux deux dispositifs (13) d'enroulement qui sont disposés dans cette direction (19), sont décalés parallèlement et sont entraînés dans le même sens de rotation (15).

2. Procédé selon la revendication 1, caractérisé par le fait que, partant d'une direction d'entrée (17) commune, on amène les deux bandes (12 l, 12 r) de feuille plane, après leur séparation et après le changement de direction de marche de l'une des deux bandes dans une direction de sortie (19) verticale dans les dispositifs (13) d'enroulement.

3. Procédé selon la revendication 2, caractérisé par le fait que la direction d'entrée (17) est horizontale et par le fait qu'après un changement de direction de marche à 180 degrés de l'une (11) des bandes de feuille on dévie la direction de marche des deux bandes de feuille à 90 degrés dans la direction (19) de sortie verticale et ce faisant on fait tourner les deux bandes de feuille de 180 degrés autour de leur axe longitudinal de manière telle que lesdites deux bandes (12 l, 12 r) soient enroulées avec la même face (A, I) tournée vers l'extérieur pour former un rouleau (14 l, 14 r) de feuille.

4. Procédé selon la revendication 3, caractérisé par le fait que l'on dévie simultanément à 90 degrés les bandes de feuille à partir de la direction (16) verticale de marche pour les amener dans la direction (17) horizontale d'entrée.

5. Procédé selon la revendication 2, caractérisé par le fait que la direction (17) d'entrée est verticale et par le fait que l'on dévie tout d'abord à 90 degrés la bande de feuille (L) déviée pour l'amener dans une direction de marche horizontale à la suite de quoi, à partir de cette direction, on la dévie à 90 degrés pour l'amener dans la direction de sortie (19) verticale.

6. Installation (1) de production de feuille soufflée pour une feuille (4) soufflée mise à plat qui est fendue longitudinalement au moyen d'un dispositif de séparation pour former des bandes de feuille (12 l, 12 r) planes, les bandes de feuille planes séparées étant amenées chacune à un dispositif (13) d'enroulement et enroulées sur ceux-ci de manière telle que dans chaque rouleau (14) la face intérieure (I) ou la face extérieure (A) de la feuille (4) soufflée soit orientée de manière uniforme dans la même direction, caractérisée par le fait qu'il est prévu un dispositif de retournement (9) en aval du dispositif de séparation assurant la division de la feuille (4) soufflée mise à plat en deux bandes (12 l, 12 r) de feuille plane et par le fait que les deux bandes (12 l, 12 r) de feuille sont introduites dans le dispositif de retournement (9) et retournées autour de leur axe longitudinal de manière telle que, partant de leur direction de marche commune, les deux bandes (12 l, 12 r) sont séparées l'une de l'autre par déviation de l'une (12 l) d'entre elles, que ladite bande (12 l) de feuille est ensuite déviée de nouveau dans la même direction de marche (19) en étant décalée parallèlement à l'autre bande (12 r) de feuille et que les deux bandes (12 l, 12 r) sont amenées aux deux dispositifs (13) d'enroulement qui sont disposés dans cette direction (19), sont décalés parallèlement et sont entraînés dans le même sens de rotation (15).

7. Installation (1) de production de feuille soufflée selon la revendication 6, caractérisée par le fait que les bandes de feuille arrivent dans la direction horizontale (17) d'entrée dans le dispositif de retournement (9) dans lequel un premier dispositif (10 b) de déviation est disposé perpendiculairement à la direction de marche (17) des feuilles aux fins d'inverser la direction de marche de l'une des deux bandes et par le fait qu'il est prévu à la suite de celui-ci, pour les deux bandes de feuille, un deuxième dispositif de déviation (10 c, 10 d) qui, par rapport à la direction de marche des bandes de feuille concernées, est disposé de telle sorte que lesdites bandes de feuille soient déviées dans une direction verticale de marche en direction des dispositif d'enroulement (13) disposés côté à côté et décalés parallèlement.

8. Installation (1) de production de feuille soufflée selon la revendication 6, caractérisée par le fait que les bandes de feuille soufflée circulent dans la direction verticale vers la bas dans le dispositif de retournement (9) dans lequel un premier dispositif de déviation (10 b) aux fins d'inverser la direction de marche de l'une des deux bandes de feuille est disposé perpendiculairement à la direction de marche (17), par le fait qu'il est prévu, pour la bande de feuille (L) déviée, un deuxième dispositif de déviation (10 c) incliné qui dévie horizontalement la direction de marche de la bande et par le fait qu'il est prévu un troisième dispositif de déviation (10 e) incliné au moyen duquel la bande est amenée dans la direction (19) verticale de marche.

9. Installation (1) de production de feuille soufflée selon la revendication 7, caractérisée par le fait que les bandes de feuille sont amenées dans la direction verticale (16) de marche dans le dispositif de retournement (9) et que les bandes de feuille sont déviées dans la direction d'entrée (17) horizontale par un dispositif de déviation (10 a) disposé à 45 degrés par rapport à la direction (16) de marche des bandes.

10. Installation (1) de production de feuille soufflée selon l'une des revendications 6 à 9, caractérisée par le fait que les bandes de feuille dont les faces sont orientées de la même manière circulent parallèlement et sensiblement dans le même plan en direction de leur dispositif (13) d'enroulement respectif.

11. Installation (1) de production de feuille soufflée selon l'une des revendications 7 à 10, caractérisée par le fait que les dispositifs de déviation (10 - 10 e) sont disposés dans un plan de manière telle que les bandes de feuilles soient parallèles entre elles dans le dispositif de retournement (9).

12. Installation (1) de production de feuille soufflée selon l'une des revendications 6 à 10, caractérisée par le fait que la feuille (4) soufflée est séparée en deux bandes de feuille planes de même largeur.

13. Installation (1) de production de feuille soufflée selon l'une au moins des revendications 6 à 12, caractérisée par le fait que les dispositifs d'enroulement (13) sont disposés côte à côte et que les arbres mutuellement alignés ou mutuellement parallèles de deux dispositifs d'enroulement (13) consécutifs sont entraînés dans le même sens de rotation (15) et avec la même vitesse de rotation.
